(19) Europäisches Patentamt
European Patent Office
Office européen des brevets

(11)  **EP 3 187 979 B1**

(12)  **FASCICULE DE BREVET EUROPEEN**

(45) Date de publication et mention
de la délivrance du brevet:
**18.09.2019   Bulletin 2019/38**

(51) Int Cl.:
***G06F 3/033*** *(2013.01)*

(21) Numéro de dépôt: **16207341.5**

(22) Date de dépôt: **29.12.2016**

(54)  **PROCEDE DE CONTROLE D'UN CURSEUR DE VISEE AU MOYEN D'UNE MANETTE DE JEU ET MANETTE DE JEU CORRESPONDANTE**

VERFAHREN ZUR STEUERUNG EINES ZIELCURSORS MITHILFE EINES JOYSTICKS, UND ENTSPRECHENDER JOYSTICK

METHOD FOR CONTROLLING A SIGHT EXTENSION USING A JOYSTICK AND CORRESPONDING JOYSTICK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.01.2016   FR 1650001**

(43) Date de publication de la demande:
**05.07.2017   Bulletin 2017/27**

(73) Titulaire: **Bigben Interactive SA**
**59814 Lesquin Cedex (FR)**

(72) Inventeurs:
• **FALC, Alain**
**8500 Kortrijk (BE)**

• **ALLAERT, Yannick**
**62410 Meurchin (FR)**
• **CHATRIER, Norman**
**92300 Levallois-Perret (FR)**
• **DUDOYER, Stephen**
**59810 Lesquin (FR)**

(74) Mandataire: **Vigand, Philippe et al**
**Novagraaf International SA**
**Chemin de l'Echo 3**
**1213 Onex - Genève (CH)**

(56) Documents cités:
**WO-A1-2014/106594      US-A1- 2005 190 150**
**US-A1- 2013 100 021**

**Description**

La présente invention concerne de manière générale un procédé de contrôle d'un dispositif d'actionnement de jeu muni d'au moins un élément de commande de direction, comme par exemple une manette de jeu munie d'un ou plusieurs sticks directionnels ou encore un joystick ou une manette de type manche à balai. L'invention concerne plus particulièrement le procédé de contrôle d'un curseur de visée au moyen de l'élément de commande de direction dans le but d'adapter ce type de dispositif d'actionnement de jeu, ordinairement destiné à une utilisation pour console de jeux vidéos, à une utilisation pour jeux sur ordinateur en remplacement d'un contrôleur de jeu de type souris. L'invention concerne également le dispositif d'actionnement de jeu résultant.

Dans la suite de la présente description, on utilisera les expressions « position de repos » et « zone morte statique » en lien avec l'élément de commande de direction, à savoir notamment un levier de joystick ou un stick de manette de jeu. On entend par « position de repos », la position prise par l'élément de commande de direction lorsqu'il n'est pas actionné par l'utilisateur. On entend par zone morte statique, une zone définie autour de la position de repos, dans laquelle les déplacements de l'élément de commande de direction pourront ne pas être pris en considération.

De la même manière, on utilisera les expressions « position de maintien» pour définir une position, autre qu'une position de butée ou que la position de repos, dans laquelle l'utilisateur maintient le joystick et « zone morte dynamique décalée » pour définir une zone morte, décalée par rapport à la zone morte statique et définie de manière dynamique autour d'une position de maintien.

L'utilisation d'une zone morte statique autour de la position de repos du joystick est un traitement commun à de nombreux logiciels permettant de viser avec un joystick. Un tel traitement présente néanmoins de nombreux inconvénients et limitations dans la mesure où il s'avère difficile, voire impossible, de déplacer au moyen d'un tel joystick, un curseur de visée à l'écran en direction d'une cible, et d'obtenir ensuite une visée stable, une fois la cible rejointe par le curseur de visée, sans avoir à replacer le joystick au niveau de sa position de repos, ce qui n'est évidemment pas sans incidence sur le déplacement à l'écran du curseur de visée.

Des procédés de réglage d'un joystick sont connus dans l'art antérieur, en particulier du document JP 2010-137079. Ce document décrit un procédé de réglage de la zone morte statique du joystick. Les informations de localisation basées sur l'actionnement du levier d'un joystick sont fournies à un circuit de commande pour ensuite entraîner un moteur sur la base des informations de localisation. Le circuit de commande détecte une position de point mort ou position de repos et définit une zone morte statique dans une plage définie autour de cette position de repos à chaque fois que le levier retourne automatiquement dans sa position de repos. De cette manière, la zone morte statique peut être réglée autour de la position de repos quelle que soit la variation de cette position. Un tel procédé de réglage n'est toutefois pas adapté à une utilisation du joystick comme dispositif d'actionnement d'un jeu et ne présente donc pas les mêmes contraintes, comme par exemple une utilisation soutenue et saccadée du levier sur lequel peuvent être exercées des forces d'actionnement importantes par l'utilisateur, ni les mêmes exigences, comme par exemple le besoin de cumuler rapidité et précision pour des jeux avec visée.

Un autre procédé de réglage d'un joystick est connu dans l'art antérieur, en particulier du document JPH08-281584. Ce document décrit un procédé de gestion de la zone morte statique d'un levier de type joystick. En fonction de la position du joystick, une tension de sortie est fournie. La zone morte statique est négligée lorsque la quantité du changement de tension entre deux mesures est supérieure à un seuil déterminé. Un tel procédé de gestion n'est toutefois pas adapté à une utilisation du joystick comme dispositif d'actionnement d'un jeu et ne présente donc pas les mêmes contraintes, comme par exemple le besoin de cumuler rapidité et précision pour des jeux avec visée.

Enfin, le document US2013/100021 décrit un élément de contrôle multi-capteurs permettant d'améliorer la sensibilité et la fonctionnalité, le document US2005/190150 décrit un périphérique d'entrée informatique fournissant une information de position absolue et relative et le document WO2014106594 décrit un élément mobile de commande préhensible simulant un joystick ou manette de jeu équivalente à au moins un élément de commande à butée physique, et un procédé de simulation associé.

De manière générale, l'adaptation d'une manette de jeu ou d'un joystick pour une utilisation sur ordinateur présente un certain nombre de difficultés dont quelques-unes sont listées ci-dessous. Par souci de simplicité, nous utiliserons uniquement la dénomination liée à un joystick, mais bien entendu cela reste également valable pour un stick de manette de jeu.

Tout d'abord, une première difficulté est liée au déplacement du levier d'un joystick basé sur sa position absolue. Le signal obtenu à partir d'un joystick fournit une information sur la position du levier mais ne donne aucune information sur son mouvement. Il en résulte un important manque de réactivité lors de son utilisation en tant que périphérique de pointage. Ceci est notamment le cas pour les jeux de tir impliquant une visée au moyen du joystick. La visée peut être résumée au problème suivant: étant donné un curseur contrôlé par l'utilisateur et une cible (éventuellement mobile), il s'agit de déplacer le curseur sur la cible le plus rapidement et précisément possible. Ce problème est traité de façon radicalement différente par l'utilisateur selon que le périphérique utilisé soit une souris ou un joystick. Dans le cas d'une souris le mouvement du curseur reproduit le mouvement de la souris, l'utilisateur n'a qu'à déplacer cette dernière en conséquence. Dans le cas d'un joystick l'utilisateur doit orienter le levier dans la direction correspondant à la cible, la vitesse de déplacement dépend alors de l'inclinaison du levier. Or l'inclinaison est limitée par l'amplitude de ce dernier, ce processus rend la visée moins naturelle et moins réactive.

Une autre difficulté concerne le recentrage du joystick par rapport à sa position centrale correspondant à l'absence de mouvement du curseur. Pour cela il est nécessaire que le levier se recentre systématiquement dans sa position de repos lorsqu'il n'est pas manipulé. Or le mécanisme employé (généralement un ressort) ne permet pas un recentrage parfait, de sorte que la position de repos ne correspond pas à la position centrale. Ce recentrage est même souvent très approximatif (parfois plus de 15 % de l'amplitude totale). Ceci provoque un mouvement permanent du curseur et contraint l'utilisateur à devoir lui même recentrer le joystick ce qui complique encore la visée, en particulier lorsqu'il faut stabiliser le curseur sur une cible donnée.

Une autre difficulté concerne le manque d'amplitude du joystick. L'utilisation d'une souris n'impose pas de contrainte liée à l'amplitude du mouvement. L'utilisateur dispose théoriquement d'autant d'espace que nécessaire afin de décomposer le mouvement et d'augmenter la précision du geste. L'amplitude d'un joystick est quant à elle limitée, en conséquence pour une visée précise nécessitant une sensibilité basse, la vitesse maximale de déplacement du curseur devrait être faible de sorte que la visée perd alors en réactivité. Il est alors par exemple très difficile, voire quasi impossible, dans ces conditions d'atteindre une cible se déplaçant rapidement ou d'atteindre rapidement une cible immobile. Réciproquement une visée réactive nécessite une sensibilité élevée et entraine une perte de précision.

Un but de la présente invention est de répondre aux inconvénients de l'art antérieur mentionnés ci-dessus et en particulier, tout d'abord, de proposer un procédé de contrôle d'un curseur de visée sur un écran au moyen d'un dispositif d'actionnement de jeu équipé d'un élément de commande direction permettant d'exploiter au mieux les performances du dispositif d'actionnement de jeu et de fournir à son utilisateur une qualité et une expérience de jeu comparable à celle obtenue avec un clavier et une souris et plus particulièrement d'optimiser la gestion de la visée.

Pour cela un premier aspect de l'invention concerne un procédé de contrôle d'un curseur de visée sur un écran selon la revendication indépendante 1.

Un tel procédé de contrôle permet de tenir compte et d'exploiter les mouvements de l'élément de commande de direction et de compenser en partie les défauts liés à l'utilisation de la zone morte statique usuelle. En effet, un tel procédé permet de définir une zone morte dynamique décalée par rapport à la zone morte statique en fonction des positions successives détectées de l'élément de commande de direction en dehors de la zone morte statique. Une telle zone morte dynamique décalée, lorsqu'elle est activée, permet d'obtenir une stabilité du curseur de visée en dehors de la zone morte statique autour de la position de maintien et ainsi assurer une précision de visée nettement améliorée.

Avantageusement, l'élément de commande de direction est agencé pour se déplacer selon au moins deux axes formant un plan, la zone morte dynamique décalée étant définie par un déplacement prédéterminé dans le plan autour de la position de maintien. La définition de la zone morte dynamique décalée par rapport au plan défini par les deux axes de déplacement permet d'assurer une stabilité de visée pour l'ensemble des mouvements susceptibles d'être réalisés par l'utilisateur lors de l'actionnement de l'élément de commande de direction.

Avantageusement, ladite au moins une dérivée calculée est la vitesse de déplacement de l'élément de commande de direction basée sur un historique des positions détectées.

Avantageusement selon une variante, l'étape d'activation de la zone morte dynamique décalée comprend les sous-étapes consistant à :

- comparer la vitesse de déplacement de l'élément de commande de direction avec un seuil de vitesse prédéterminé,
- lorsque la vitesse de déplacement de l'élément de commande est inférieure au seuil de vitesse prédéterminé, activer la zone morte dynamique décalée après écoulement d'un temps de latence prédéterminé.

Il en résulte une précision améliorée en particulier pour une opération de visée grâce à l'utilisation d'une telle zone morte dynamique, en particulier lorsque le curseur de visée est arrêté aux environs de la cible.

Avantageusement selon une autre variante, l'étape d'activation de la zone morte dynamique décalée comprend les sous-étapes consistant à :

- comparer la vitesse de déplacement de l'élément de commande de direction avec un seuil de vitesse prédéterminé,
- lorsque la vitesse de déplacement de l'élément de commande est inférieure au seuil de vitesse prédéterminé, activer progressivement la zone morte dynamique décalée durant un temps de latence prédéterminé pendant au moins une partie duquel est activée une fonction d'amortissement prédéterminée du curseur de visée.

Il en résulte une précision améliorée en particulier pour une opération de visée grâce à l'utilisation d'une telle zone morte dynamique, en particulier lorsque le curseur de visée est ralenti aux environs de la cible. En outre, un tel contrôle permet d'assurer, quand la vitesse du stick diminue et passe en dessous du seuil de vitesse, que la sensibilité du curseur de visée soit diminuée progressivement jusqu'à l'activation complète de la zone morte dynamique.

Avantageusement, la fonction d'amortissement est une fonction décroissante en fonction du temps et le procédé comprend une étape consistant à transmettre des données de position correspondant à la position détectée pondérée par la fonction d'amortissement lorsqu'elle est activée, de sorte que le curseur de visée est à l'arrêt après écoulement du temps de latence.

Plus avantageusement encore, le temps de latence est décomposé de la manière suivante :

- une première partie du temps de latence durant laquelle la fonction d'amortissement n'est pas activée ; et
- une deuxième partie du temps de latence, durant laquelle la fonction d'amortissement est activée.

Cette activation progressive de la zone morte permet une transition fluide entre l'état inactif et l'état actif de la zone morte dynamique. Ainsi, un mouvement dont la vitesse passe momentanément en dessous du seuil de vitesse prédéterminée et se situant dans la zone morte dynamique n'est pas brutalement interrompu. L'utilisation d'un temps de latence décomposé en deux parties permet d'optimiser encore un peu plus le lissage des déplacements du curseur de visée. La possibilité de réglage par l'utilisateur du temps de latence permet de s'adapter d'une part aux habitudes de jeu de ce dernier et d'autre part aux différents exigences de jeu suivant le jeu considéré.

Avantageusement, le procédé comprend en outre une étape consistant à transmettre des données de position correspondant à une valeur prédéfinie, lorsqu'après écoulement du temps de latence, la vitesse de déplacement de l'élément de commande est inférieure au seuil de vitesse prédéterminé et la position détectée est située dans la zone morte dynamique décalée. Il en résulte une stabilité de la visée dès lors qu'une position de maintien est détectée et que la zone morte dynamique correspondante est activée. Ainsi, les petits mouvements détectés dans la zone morte dynamique décalée autour de la position de maintien sont ignorés tant que la vitesse de déplacement de l'élément de commande reste inférieure à une vitesse de seuil prédéterminée.

Avantageusement, l'étape de transmission des données consiste en outre à transmettre des données de position correspondant à la position détectée, lorsque alternativement, la vitesse de déplacement de l'élément de commande est supérieure au seuil de vitesse prédéterminé ou lorsque la vitesse de déplacement de l'élément de commande est inférieure au seuil de vitesse prédéterminé et que la position détectée est située en dehors de la zone morte dynamique décalée. De cette manière, il résulte une réactivité maintenue par la transmission des donnes de position dès lors que la vitesse de déplacement franchit le seuil de vitesse prédéterminé ou lorsque l'élément de commande sort de la zone morte dynamique décalée.

Avantageusement, le procédé comprend en outre une étape consistant à déplacer le curseur de visée sur l'écran dans la même direction que celle du déplacement de l'élément de commande de direction par rapport à la zone morte dynamique décalée, lorsque des données de position correspondant à la position détectée sont transmises. Une telle étape permet d'améliorer la simulation d'un contrôleur de jeu de type souris en prenant en compte un changement de direction dès le départ du mouvement de l'élément de commande sans attendre le retour par la position de repos.

Avantageusement, le procédé comprend en outre une étape consistant à lisser la position détectée par rapport à un historique des positions précédentes, lors d'un déplacement depuis une position située dans la zone morte dynamique décalée vers une position située au dehors afin de gommer un saut de position lié à la sortie de la zone morte dynamique décalée. De cette manière, il est toujours possible de prendre en compte des mouvements quelque soit leur vitesse et en particulier pour de petites vitesses.

Avantageusement, le dispositif d'actionnement de jeu est équipé en outre d'une pluralité d'organes de commande et le procédé comprend en outre une étape consistant à attribuer à ladite pluralité d'organes de commande des fonctionnalités ordinairement attribuées à des touches d'un clavier. De cette manière, le procédé permet de simuler au moyen d'un tel dispositif d'actionnement de jeu normalement utilisé avec une console de salon, un contrôleur de jeu pour ordinateur personnel comprenant une souris et un clavier.

Avantageusement, il peut être prévu en outre les étapes consistant à détecter la position de maintien de l'élément de commande de direction le long dudit au moins un axe et à définir la zone morte dynamique décalée autour de la position de maintien de sorte que la position de maintien soit située au centre de la zone morte dynamique décalée. L'objectif est de pouvoir utiliser une zone morte dynamique décalée moins grande.

Avantageusement, l'élément de commande de direction présente une vitesse maximale d'origine pour se déplacer le long dudit au moins un axe, le procédé comprenant en outre les étapes consistant à calculer automatiquement la vitesse maximale selon chaque direction le long dudit au moins un axe ; et à effectuer une mise à l'échelle selon chaque direction le long de l'axe en faisant varier le coefficient de sensibilité afin de restaurer la vitesse maximale d'origine et d'obtenir une visée symétrique.

Avantageusement, l'élément de commande de direction présente, lors d'un déplacement en butée le long dudit au moins un axe, une inclinaison maximale par rapport à la position de repos, le procédé comprenant en outre une étape consistant à régler un pourcentage de l'inclinaison maximale pour définir la zone morte statique, respectivement la zone morte dynamique décalée, autour de la position de repos, respectivement autour de la position de maintien. Alternativement, le procédé peut comprendre une étape consistant à entrer une valeur de rayon permettant de définir un disque par projection sur le plan du mouvement sphérique de l'élément de commande de direction et utiliser le disque par projection ainsi défini pour déterminer la zone morte statique, respectivement la zone morte dynamique décalée. Ces étapes additionnelles permettent d'optimiser la définition de la zone morte statique, respectivement dynamique décalée, tout en évitant les mouvements indésirables du curseur à l'écran.

Un deuxième aspect de l'invention concerne un procédé de contrôle d'un curseur de visée plus général englobant le premier aspect et comprenant les étapes suivantes :

- initialisation d'une pluralité de paramètres ;
- acquisition de données relatives au déplacement de l'élément de commande ;
- gestion d'une zone morte statique ;
- gestion d'une zone morte dynamique décalée conformément au premier aspect sus-décrit ;
- gestion dynamique des déplacements de l'élément de commande conformément au deuxième aspect sus-décrit ;
- traitement et transmission des données pertinentes par le dispositif d'actionnement de jeu à l'unité de traitement numérique pour le déplacement du curseur de visée.

Un troisième aspect de l'invention concerne un dispositif d'actionnement de jeu pour le contrôle d'un curseur de visée sur un écran selon la revendication indépendante 13.

Un dispositif de jeu selon le troisième aspect de l'invention présente une réactivité et une précision plus grande en particulier pour les jeux vidéo sur ordinateur impliquant une visée.

L'invention concerne également d'autres aspects qui en combinaison avec l'un des différents aspects permettent encore d'améliorer la réactivité et la précision du dispositif d'actionnement de jeu.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

- la figure 1 représente, de manière générale, un procédé de contrôle d'un curseur de visée sur un écran au moyen d'un joystick selon un aspect de l'invention ;
- la figure 2 représente une phase d'initialisation du procédé ;
- la figure 3 représente une phase d'acquisition de données relatives au déplacement du joystick ;
- la figure 4 représente un procédé de contrôle de la zone morte statique d'un joystick ;
- la figure 5 représente un procédé de contrôle de la zone morte dynamique décalée d'un joystick ;
- la figure 6 représente la mise en oeuvre d'une fonction d'amortissement ;
- la figure 7 représente une méthode de configuration de la zone morte statique ;
- la figure 8 représente schématiquement un joystick selon un mode de réalisation de l'invention.

Dans la suite de la présente description, par souci de simplification, il est fait référence uniquement à un joystick pour indiquer indistinctement le dispositif d'actionnement de jeu, i.e. le joystick lui-même, et l'élément de commande de direction, i.e. le levier de commande du joystick. Dans les modes de réalisations présentés ci-après, le joystick se déplace suivant deux axes X et Y formant un plan, bien que cela soit également possible pour des déplacements suivant un seul axe ou trois axes. On comprendra encore que cela s'applique de la même manière à tout dispositif de jeu muni d'un élément de commande de direction comme par exemple une manette de jeu équipée d'un stick.

Il est également fait mention de l'interaction avec un système d'imagerie et de sons tel qu'un écran relié à une unité de traitement numérique comme par exemple un ordinateur personnel, et en particulier dans le cadre d'un jeu vidéo présentant un curseur sur l'écran pour assurer une visée. Les différentes données, en particulier de position et de vitesse, ainsi que les paramètres prédéfinis par l'utilisateur sont stockées dans des mémoires volatile ou non volatile suivant les besoins. L'utilisation de tels moyens de stockage n'est pas explicitement mentionnée par la suite. La transmission des données fait référence de manière générale à la communication des données pertinentes par le joystick à l'unité de traitement numérique pour l'avancement du jeu.

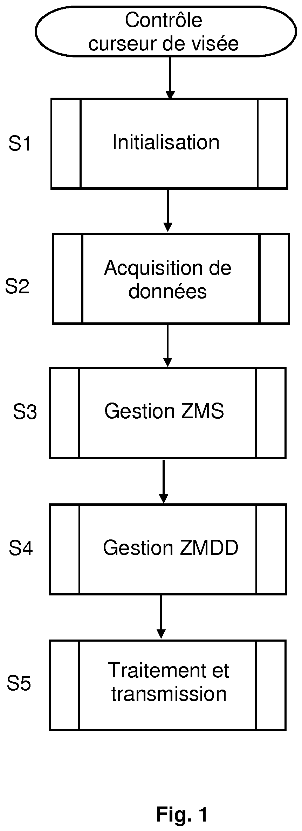

La figure 1 représente, de manière générale, un procédé de contrôle d'un curseur de visée sur un écran au moyen d'un joystick selon un mode de réalisation de l'invention.

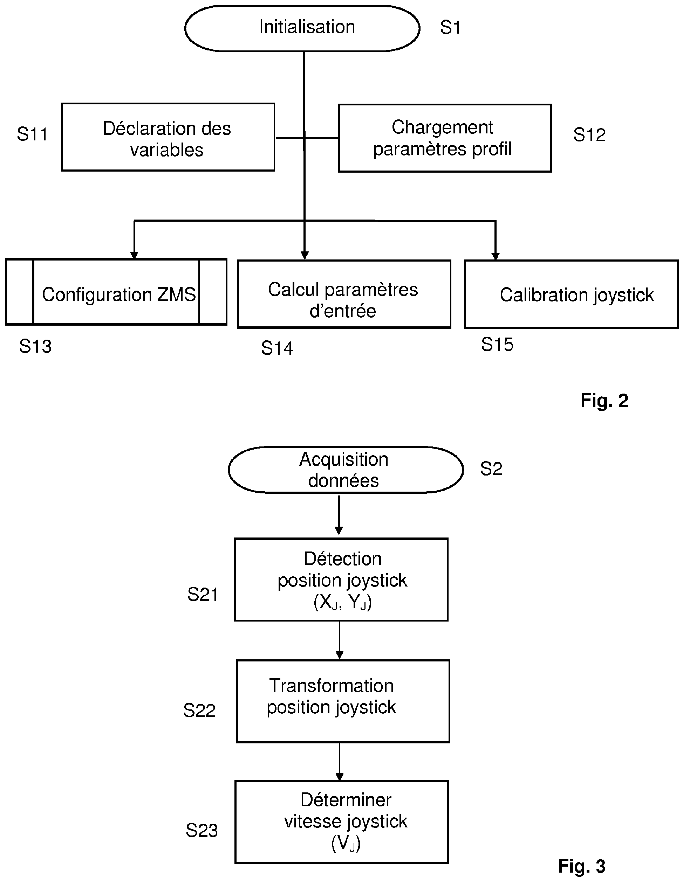

Une étape préliminaire S1 consiste à initialiser, configurer, calibrer et calculer un certain nombre de paramètres, décrite plus en détail en lien avec la figure 2.

Une étape S2 consiste dans l'acquisition de données relatives au déplacement du joystick, décrite plus en détail en lien avec la figure 3.

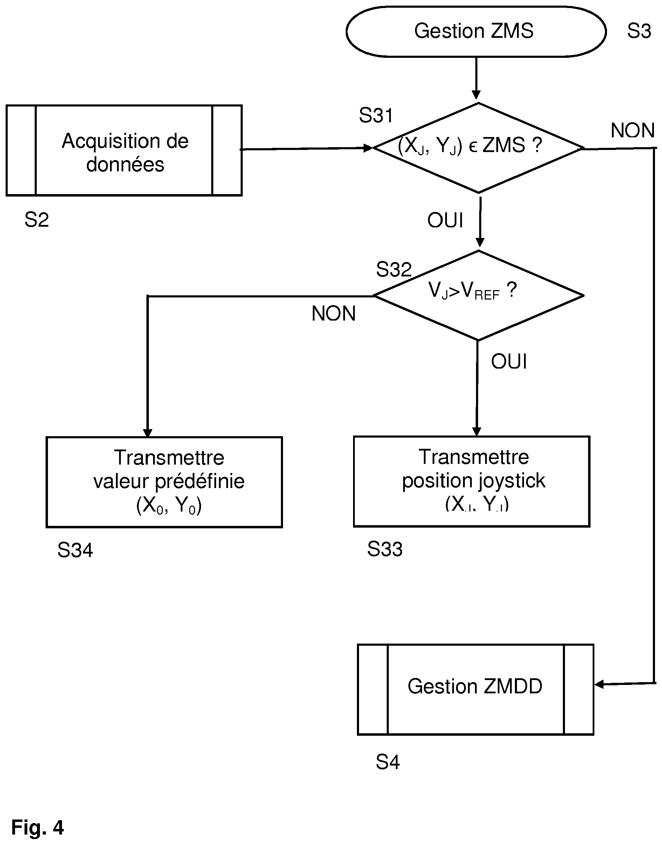

Une étape S3 consiste dans la gestion d'une zone morte statique, décrite plus en détail en lien avec la figure 4.

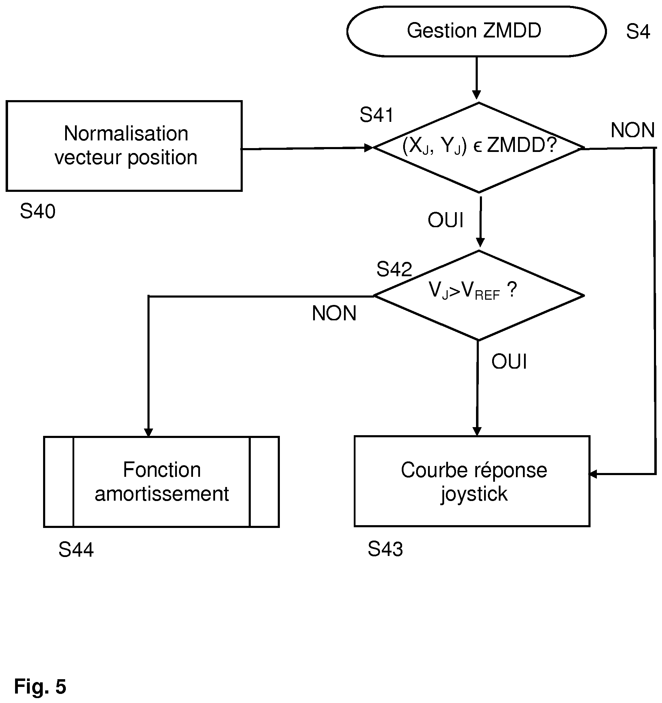

Une étape S4 consiste dans la gestion d'une zone morte dynamique décalée, décrite plus en détail en lien avec la figure 5.

Enfin, l'étape S5 consiste dans le traitement et la transmission de données pertinentes par le joystick à l'unité de traitement numérique pour le déplacement du curseur de visée sur l'écran.

La figure 2 représente la phase d'initialisation du procédé dont certaines étapes sont réalisées une fois au début et n'ont plus besoin d'être réitérées lors de l'exécution du procédé.

Les étapes S11 et S12 consistent dans la déclaration de variables et dans le chargement de paramètres liés au profil de l'utilisateur. Par exemple, les paramètres et variables suivants pourront être réglés par l'utilisateur ou déterminés par le joystick : sensibilité sur les axes X et Y de déplacement du joystick, seuil de vitesse pour (ré)activation d'une zone morte dynamique décalée, rayon du disque de la zone morte (statique et/ou dynamique), temps de latence pour activation de la fonction d'amortissement et/ou de la zone morte dynamique décalée, courbes de réponse du joystick.

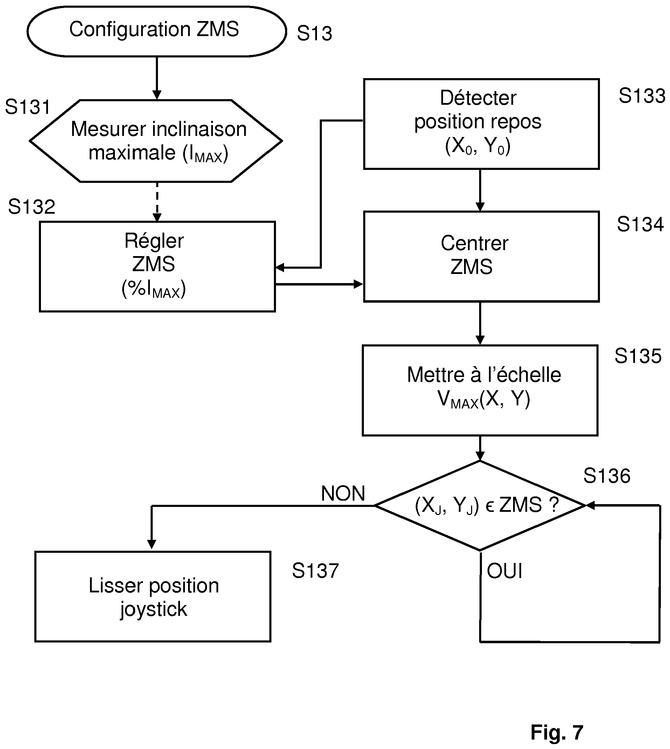

L'étape S13 consiste dans la configuration de la zone morte statique, décrite plus en détail en lien avec la figure 7.

L'étape S14 consiste dans le calcul et/ou la définition de paramètres utilisés dans le cadre du procédé, comme par exemple la fonction d'amortissement.

L'étape S15 consiste dans la calibration pour compenser le mauvais centrage éventuel du joystick sur les axes X et Y notamment en cas de dérive de la position de repos. Par exemple, un traitement consiste à renseigner par le biais d'une saisie effectuée par l'utilisateur, l'angle maximal d'inclinaison du joystick et à calculer sa position réelle. En effet, les données fournies par le joystick mesurent en général l'inclinaison de ce dernier sur deux axes, l'axe horizontal et l'axe vertical. La position réelle peut être alors calculée en tenant compte de l'inclinaison maximale préalablement renseignée. La position réelle est calculée. Selon une première option, la position calculée dite normée est définie comme l'angle d'inclinaison du joystick à un facteur près indépendamment de la direction suivie. Selon une seconde option, la position réelle est calculée en tenant compte de la position normée et de la direction d'inclinaison de sorte que la position du joystick est interprétée comme un point mobile se déplaçant sur une sphère, la position normée correspondant à la longueur de l'arc de cercle joignant le joystick au point central, normalement le point de repos. Selon une troisième option, si le calcul de la position normée n'est pas effectué, la position est calculée comme étant le projeté de sa position sur le plan équatorial de la sphère dont le pôle nord correspond à la position centrale. Concrètement la direction reste la même que dans la deuxième option mais la norme de la position est le sinus de la norme précédente.

La figure 3 représente une phase d'acquisition de données relatives au déplacement du joystick.

Une étape S21 consiste à détecter la position $(X_J, Y_J)$ du joystick suivant les deux axes de déplacement par rapport à la position de repos considérée initialement comme la position centrale $(X_0, Y_0)$. La détection de la position du joystick est réalisée périodiquement et de préférence à haute fréquence de sorte à être capable de détecter tous les mouvements réalisés par l'utilisateur. La fréquence d'échantillonnage utilisée est choisie de préférence entre 125 et 500 Hz. Une fréquence élevée, comme par exemple 500 Hz, sera particulièrement avantageuse en ce qu'elle permet de réaliser des calculs sur un historique de positions détectées plus important avant que les données ne soient transmises à un système d'imagerie et de sons.

Une étape S22 optionnelle consiste à transformer la position du joystick détectée dans un système de coordonnées prédéterminé.

Une étape S23 consiste à déterminer la vitesse $V_J$ de déplacement du joystick sur la base des positions détectées successivement à l'étape S2. La détermination de la vitesse est également réalisée périodiquement, et de préférence à la même fréquence que celle utilisée pour la détection de position, de sorte à tenir compte des changements de vitesse en temps réel.

La figure 4 représente la gestion de la zone morte statique (ZMS) du joystick. On entend par gestion de la zone morte statique, un réglage qui se base sur la position, le mouvement et la vitesse du joystick obtenus à l'étape S2 d'acquisition de données.

Une étape S31 consiste à déterminer si la position $(X_J, Y_J)$ détectée est située dans la zone morte statique ou non. Si la position détectée se situe dans la zone morte statique, le procédé passe à l'étape S32, sinon il passe à l'étape S4 de gestion d'une zone morte dynamique décalée, décrit plus en détail en lien avec la figure 5.

L'étape S32, c'est-à-dire lorsque la position détectée se situe dans la zone morte statique, consiste à comparer la vitesse du joystick avec un seuil de vitesse $V_{REF}$ prédéterminé afin de déterminer comment doivent être gérées les données de position détectées dans la zone morte statique suivant la vitesse de déplacement du joystick. Si la vitesse $V_J$ de déplacement du joystick est supérieure au seuil de vitesse $V_{REF}$ prédéterminé, le procédé de contrôle passe à l'étape S33. Si, par contre, la vitesse $V_J$ de déplacement du joystick est inférieure au seuil de vitesse $V_{REF}$ prédéterminé, le procédé de contrôle passe à l'étape S34.

A l'étape S33, c'est-à-dire lorsque la vitesse $V_J$ de déplacement du joystick est supérieure au seuil de vitesse $V_{REF}$ prédéterminé, le joystick transmet des données de position relatives à la position $(X_J, Y_J)$ du joystick. Le procédé retourne ensuite à l'étape S2 d'acquisition de données pour la prochaine mesure de position du joystick.

L'étape S34, c'est-à-dire lorsque la vitesse $V_J$ de déplacement du joystick est inférieure au seuil de vitesse $V_{REF}$ prédéterminé, consiste à transmettre une valeur prédéfinie à la place de la position effectivement détectée. Cette valeur est choisie de préférence comme étant la position de repos $(X_0, Y_0)$ du joystick, ou une valeur nulle, dans la mesure où il n'est pas souhaitable de retranscrire de légers déplacements du joystick, i.e. à faible vitesse, dans la zone morte statique, c'est-à-dire autour de la position de repos. Ensuite, le procédé retourne à l'étape S2 d'acquisition de données pour une nouvelle mesure de la position du joystick.

La figure 5 représente la gestion de la zone morte dynamique décalée (ZMDD) du joystick.

De manière optionnelle, lorsque le procédé passe de la gestion de la zone morte statique à la gestion d'une zone morte dynamique décalée, il peut être prévu une étape S40 de normalisation du vecteur position.

Une étape S41 consiste à déterminer si la position $(X_J, Y_J)$ détectée est située dans la zone morte dynamique décalée ou non. Si la position détectée se situe dans la zone morte dynamique décalée, le procédé passe à l'étape S42, sinon il passe à l'étape S43 de transmission de données de position conformément à une courbe de réponse prédéfinie du joystick.

L'étape S42, c'est-à-dire lorsque la position détectée se situe dans la zone morte dynamique décalée, consiste à comparer la vitesse du joystick avec un seuil de vitesse $V_{REF}$ prédéterminé afin de déterminer comment doivent être gérées les données de position détectées dans la zone morte dynamique décalée suivant la vitesse de déplacement du joystick. Si la vitesse $V_J$ de déplacement du joystick est supérieure au seuil de vitesse $V_{REF}$ prédéterminé, le procédé passe à l'étape S43. Si, par contre, la vitesse $V_J$ de déplacement du joystick est inférieure au seuil de vitesse $V_{REF}$ prédéterminé, le procédé passe à l'étape S44.

A l'étape S43, c'est-à-dire lorsque la vitesse $V_J$ de déplacement du joystick est supérieure au seuil de vitesse $V_{REF}$ prédéterminé ou lorsque la position détectée est en dehors de la zone morte dynamique décalée, le joystick transmet des données de position conformément à une courbe de réponse prédéfinie du joystick. Le procédé retourne ensuite à l'étape S2 d'acquisition de données pour la prochaine mesure de position du joystick.

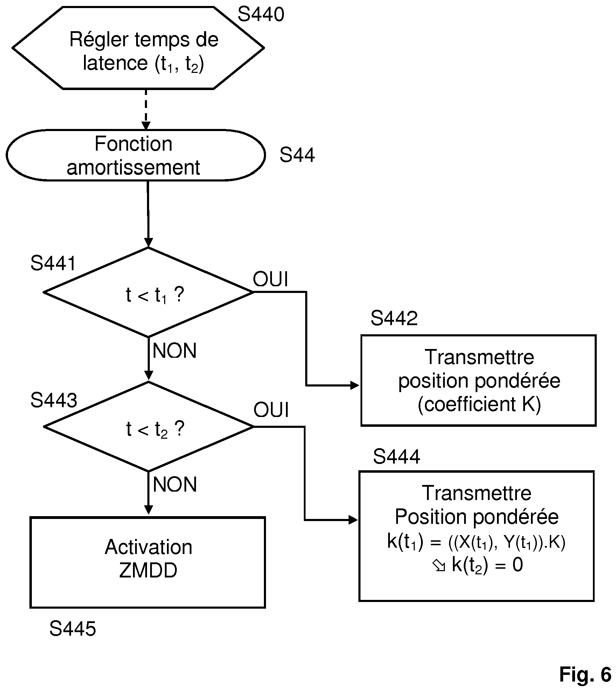

L'étape S44, c'est-à-dire lorsque la vitesse $V_J$ de déplacement du joystick est inférieure au seuil de vitesse $V_{REF}$ prédéterminé, consiste à transmettre des données de position pondérée par une fonction d'amortissement décrite plus en détail avec la figure 6. Ensuite, le procédé retourne à l'étape S2 d'acquisition de données pour la prochaine mesure de position du joystick.

La figure 6 représente l'étape S44 mettant en oeuvre une fonction d'amortissement.

La fonction d'amortissement prédéterminée est réglable en fonction des variables déclarées et de paramètres liés au profil de l'utilisateur. En particulier, lors d'une étape préliminaire S440 optionnelle, généralement remplie avant que l'utilisateur ne commence à jouer, l'utilisateur peut entrer des temps de latence $t_1$ et $t_2$ qui sont ensuite utilisés pour définir la fonction d'amortissement, ou alternativement un seul temps de latence ($t_2$) réglable entre des valeurs allant de 8 millisecondes (ms) à 1200 ms.

Les temps de latence $t_1$ et $t_2$ sont définis de la manière suivante :

$$50\% \ t_2 < t_1 < 80\% \ t_2.$$

De préférence le premier temps de latence $t_1$ est choisi pour correspondre à 2/3 du temps de latence $t_2$.

Le choix du temps de latence par l'utilisateur sera guidé par son niveau de maitrise du jeu, le type de jeu et le comportement attendu dans le jeu. Ce temps de latence permet de définir le délai de réactivation de la zone morte qui est important pour adoucir la transition entre zone morte inactive et zone morte active.

Alternativement, des valeurs par défaut pourront être appliquées pour définir les temps de latence.

L'étape S44 d'application d'une fonction d'amortissement pour la transmission de données, consiste dans une étape S441 à mesurer si le temps écoulé est inférieur au premier de temps de latence $t_1$ prédéfini, lorsque la vitesse $V_J$ de déplacement du joystick est inférieure au seuil de vitesse $V_{REF}$ prédéterminé à l'intérieur de la zone morte dynamique décalée. Si le temps écoulé est inférieur au premier temps de latence, le procédé continue à l'étape S442. Si le temps écoulé est supérieur au premier temps de latence, le procédé continue à l'étape S443.

L'étape S442, c'est-à-dire lorsque le temps écoulé est inférieur au premier temps de latence $t_1$, consiste à transmettre des données de position pondérées avec un coefficient de sensibilité constant K, choisi entre 0.1 et 1, et de préférence entre 0.8 et 1, afin de garder une certaine inertie dans le traitement d'un ralentissement dans le déplacement du joystick.

Après cette transmission, le procédé retourne à l'étape S41, sans réinitialisation du compteur de temps écoulé, consistant à vérifier que la position actuelle du joystick est toujours à l'intérieur de la zone morte dynamique décalée et que la vitesse actuelle de déplacement du joystick est toujours inférieure au seuil de vitesse $V_{REF}$ prédéterminé. Si les deux conditions sont remplies, le procédé retourne à l'étape S44. Sinon, le procédé réinitialise le compteur de temps écoulé.

L'étape S443, c'est-à-dire lorsque le temps écoulé est supérieur au premier temps de latence $t_1$, consiste à mesurer si le temps écoulé est inférieur au deuxième temps de latence $t_2$ prédéfini, depuis la détection d'un ralentissement de la vitesse de déplacement sous le seuil de vitesse prédéterminé à l'intérieur de la zone morte dynamique décalée. Si le temps écoulé est inférieur au deuxième temps de latence, le procédé continue à l'étape S444. Si le temps écoulé est supérieur au deuxième temps de latence, le procédé continue à l'étape S445.

L'étape S444, c'est-à-dire lorsque le temps écoulé est supérieur au premier temps de latence $t_1$ tout en étant inférieur au deuxième temps de latence $t_2$, consiste à transmettre des données de position pondérées au moyen d'une fonction d'amortissement k(t) décroissante de préférence depuis la donnée de position pondérée $((X(t_1), Y(t_1)).K$ avec le coefficient de sensibilité constant K au temps $t_1$ jusqu'à la valeur 0 au temps $t_2$ de sorte à amortir le mouvement du joystick dans la zone morte dynamique décalée jusqu'à retrouver la situation classique dans laquelle les petits mouvements à l'intérieur d'une zone morte ne sont pas transmis.

Le coefficient de sensibilité ou fonction d'amortissement k(t) est par exemple définie par une fonction polynomiale de degré 3 du type :

$$k(t) = a.t^3 + b.t^2 + c.t + d \qquad\qquad (1)$$

dans laquelle t représente le temps écoulé, a, b, c et d représentent des coefficients définis en fonction d'au moins un paramètre renseigné par l'utilisateur ou prédéfini (par ex. le temps de latence total).

Après cette transmission, le procédé retourne à l'étape S41, sans réinitialisation du compteur de temps écoulé, consistant à vérifier que la position actuelle du joystick est toujours à l'intérieur de la zone morte dynamique décalée et que la vitesse actuelle de déplacement du joystick est toujours inférieure au seuil de vitesse $V_{REF}$ prédéterminé. Si les deux conditions sont remplies, le procédé retourne à l'étape S44. Sinon, le procédé réinitialise le compteur de temps écoulé.

L'étape S445, c'est-à-dire lorsque le temps écoulé est supérieur au deuxième temps de latence $t_2$, consiste à activer (complètement) la zone morte dynamique décalée de sorte que tous les petits mouvements à l'intérieur de cette zone sont ignorés. On entend ici par petits mouvements, les déplacements du joystick dont la vitesse est inférieure au seuil de vitesse de référence. L'activation de cette zone morte dynamique décalée s'avère très utile pour stabiliser le curseur de visée sur une cible à l'écran et ce dans une position décalée du joystick par rapport à la zone morte statique.

La figure 7 représente une variante de réalisation du procédé incluant une configuration de la zone morte statique, conformément à l'étape S13, se basant essentiellement sur la position du joystick au repos.

La configuration de la zone morte statique (ZMS) consiste à définir la zone dans laquelle les petits mouvements du joystick ne sont, en général, pas pris en compte par le jeu vidéo pour éviter des déplacements intempestifs du curseur de visée sur l'écran. Cette configuration de la zone morte statique peut être effectuée préalablement à l'utilisation du joystick pour jouer et éventuellement être mise à jour de temps à autre en raison des possibles dérives de la position de repos du joystick suite aux nombreuses sollicitations dont il est l'objet.

Une première étape préliminaire S131 consiste à mesurer l'inclinaison maximale $I_{MAX}$ du joystick. Cette mesure peut être faite par exemple en déplaçant le joystick en butée selon les différents axes de déplacement et à mesurer l'inclinaison maximale par rapport à la position de repos, ou encore par l'intermédiaire d'une saisie par l'utilisateur de l'inclinaison maximale. Cette inclinaison maximale est de préférence définie en degrés.

L'étape S132 consiste à régler la zone morte, lorsque l'inclinaison maximale est connue. De préférence, la zone morte est définie comme la zone autour de la position de repos correspondant à un pourcentage déterminé de l'inclinaison maximale, comprise par exemple entre 0 et 10%, de préférence entre 0 et 5%, et encore plus préférentiellement 2%.

L'étape S133 consiste à détecter la position de repos du joystick. Cette position de repos $(X_0, Y_0)$ est utilisée pour déterminer la zone morte autour, notamment lors de l'étape S132.

Lors de l'utilisation du joystick, il peut arriver avec le temps que la position de repos se décale par rapport à la zone morte déterminée. L'étape S134 consiste à centrer ou recentrer la zone morte par rapport à la position de repos. Ce centrage de la zone morte est effectué en décalant le point de repos perçu comme position centrale du joystick. L'objectif est de «symétriser» le défaut de recentrage du joystick et par conséquent de pouvoir utiliser une zone morte moins grande. Par exemple, supposons que le joystick se recentre avec un décalage de -2% à +10% selon l'axe horizontal et de -4% à 14% selon l'axe vertical. Une zone morte de 14% au moins est alors nécessaire afin d'éviter tout mouvement indésirable. En décalant de -4% selon l'axe horizontal et de -5% selon l'axe vertical, le joystick se recentre avec un décalage de -6% à +6% selon l'axe horizontal et de -9% à 9% selon l'axe vertical il ne faut plus maintenant que 9% de zone morte.

Une étape supplémentaire S135 est de préférence prévue après l'étape de centrage S134. En effet, le centrage de la zone morte autour du point de repos peut entraîner une asymétrie de la visée de sorte que la vitesse maximale n'est plus la même selon la direction de déplacement du joystick. L'étape S135 consiste à calculer automatiquement la nouvelle vitesse maximale selon chaque direction et effectuer une mise à l'échelle (en faisant varier la sensibilité) dans toutes les directions afin de restaurer la vitesse maximale d'origine et de réobtenir une visée symétrique. Pour cela, l'utilisateur doit entrer les décalages maximaux et minimaux selon l'axe horizontal et vertical et la nouvelle position centrale peut être automatiquement calculée.

Il peut être également prévu une étape supplémentaire S136 consistant à détecter si la position du joystick est toujours située dans la zone morte. Lorsque la position du joystick détectée est en dehors de la zone morte, le procédé passe à l'étape S137.

L'étape S137 consiste à lisser la nouvelle position détectée du joystick par rapport à un historique des positions précédentes ce qui permet de gommer un saut de position lié à la sortie de la zone morte statique.

Selon une variante de configuration de la zone morte statique, elle peut être effectuée à travers un réglage par l'utilisateur consistant à entrer une valeur de rayon permettant de définir par projection un disque de zone morte sur le plan du mouvement usuellement sphérique du joystick. La zone morte peut être réglée entre 0 et 90% de la course du joystick correspondant à son déplacement entre sa position de repos et sa position en butée. De préférence la zone morte est définie à 2% de la course du joystick.

Une configuration similaire peut être réalisée pour la zone morte dynamique décalée, en particulier via un réglage par l'utilisateur consistant à entrer une valeur de rayon permettant de définir par projection un disque de zone morte sur le plan du mouvement usuellement sphérique du joystick.

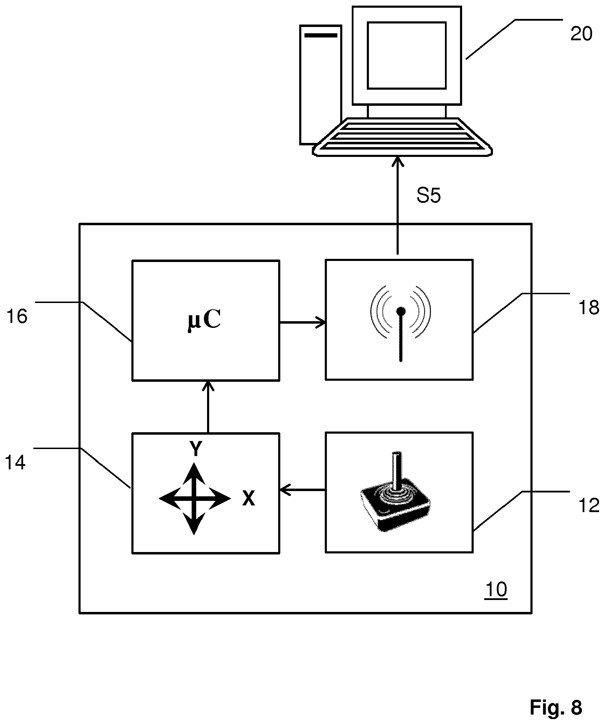

Selon un autre aspect, l'invention concerne un dispositif d'actionnement de jeu. La figure 8 représente schématiquement un joystick 10 selon un mode de réalisation de l'invention.

Le joystick comprend un levier 12 agencé pour occuper une position de repos et se déplacer selon deux axes X-Y et présentant une zone morte définie autour de la position de repos. Un capteur de position 14 est agencé pour détecter la position du levier 12 suivant les deux axes X-Y. Des moyens de traitement, comme par exemple un microcontrôleur 16, sont agencés pour déterminer la vitesse de déplacement du levier basée sur les positions successives détectées et pour comparer la vitesse de déplacement avec un seuil de vitesse prédéterminé. Des moyens de communication 18 sont agencés pour transmettre des données de position et de vitesse à une unité de traitement externe, comme par exemple un ordinateur personnel 20.

Plus particulièrement, les moyens de traitement (16) et les moyens de communication (18) sont agencés pour la mise en oeuvre du procédé de contrôle d'un curseur de visée selon l'invention.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de contrôle d'un curseur de visée sur un écran au moyen d'un dispositif d'actionnement de jeu (10) équipé d'au moins un élément de commande de direction (12) agencé pour occuper une position de repos ($X_0$, $Y_0$) lorsqu'il n'est pas actionné et se déplacer au moins selon un axe (X, Y), et présentant une zone morte statique (ZMS), dans laquelle les déplacements de l'élément de commande de direction ne sont pas pris en considération, définie par un déplacement prédéterminé de l'élément de commande de direction le long dudit au moins un axe de part et d'autre de la position de repos, le procédé comprenant l'étape de :

   - détecter une position ($X_J$, $Y_J$) de l'élément de commande de direction le long dudit au moins un axe ;

   et comprenant en outre les étapes suivantes :

   - calculer au moins une dérivée ($V_J$) d'ordre au moins un par rapport au temps de la position de l'élément de commande de direction en fonction d'un historique des positions détectées ;
   - lorsque la position détectée est située en dehors de la zone morte statique, définir une zone morte dynamique décalée (ZMDD) de part et d'autre de la position détectée dite position de maintien ;
   - activer la zone morte dynamique décalée en fonction de ladite au moins une dérivée calculée.

2. Procédé de contrôle d'un curseur de visée selon la revendication 1, dans lequel ledit au moins un élément de commande de direction est agencé pour se déplacer selon au moins deux axes formant un plan, la zone morte dynamique décalée étant définie par un déplacement prédéterminé dans le plan autour de la position de maintien.

3. Procédé de contrôle d'un curseur de visée selon la revendication 1 ou 2, dans lequel ladite au moins une dérivée calculée est la vitesse de déplacement ($V_J$) de l'élément de commande de direction basée sur un historique des positions détectées.

4. Procédé de contrôle d'un curseur de visée selon la revendication 3, dans lequel l'étape d'activation de la zone morte dynamique décalée comprend les sous-étapes consistant à :

- comparer la vitesse de déplacement de l'élément de commande de direction avec un seuil de vitesse ($V_{REF}$) prédéterminé,
- lorsque la vitesse de déplacement de l'élément de commande est inférieure au seuil de vitesse prédéterminé, activer la zone morte dynamique décalée après écoulement d'un temps de latence prédéterminé.

**5.** Procédé de contrôle d'un curseur de visée selon la revendication 3, dans lequel l'étape d'activation de la zone morte dynamique décalée comprend les sous-étapes consistant à :

- comparer la vitesse de déplacement de l'élément de commande de direction avec un seuil de vitesse ($V_{REF}$) prédéterminé,
- lorsque la vitesse de déplacement de l'élément de commande est inférieure au seuil de vitesse prédéterminé, activer progressivement la zone morte dynamique décalée durant un temps de latence prédéterminé pendant au moins une partie duquel est activée une fonction d'amortissement prédéterminée du curseur de visée.

**6.** Procédé de contrôle d'un curseur de visée selon la revendication 5, dans lequel la fonction d'amortissement est une fonction décroissante en fonction du temps, le procédé comprenant une étape consistant à :

- transmettre des données de position correspondant à la position détectée pondérée par la fonction d'amortissement lorsqu'elle est activée, de sorte que le curseur de visée est à l'arrêt après écoulement du temps de latence.

**7.** Procédé de contrôle d'un curseur de visée selon la revendication 5 ou 6, dans lequel le temps de latence est décomposé de la manière suivante :

- une première partie du temps de latence durant laquelle la fonction d'amortissement n'est pas activée ; et
- une deuxième partie du temps de latence, durant laquelle la fonction d'amortissement est activée.

**8.** Procédé de contrôle d'un curseur de visée selon l'une des revendications 4 à 7, comprenant en outre une étape consistant à :

- transmettre des données de position correspondant à une valeur prédéfinie ($X_{J0}$, $Y_{J0}$), lorsqu'après écoulement du temps de latence, la vitesse de déplacement de l'élément de commande est inférieure au seuil de vitesse prédéterminé et la position détectée est située dans la zone morte dynamique décalée.

**9.** Procédé de contrôle d'un curseur de visée selon la revendication 8, dans lequel l'étape de transmission des données consiste en outre à :

- transmettre des données de position correspondant à la position détectée, lorsque alternativement, la vitesse de déplacement de l'élément de commande est supérieure au seuil de vitesse prédéterminé ou lorsque la vitesse de déplacement de l'élément de commande est inférieure au seuil de vitesse prédéterminé et que la position détectée est située en dehors de la zone morte dynamique décalée.

**10.** Procédé de contrôle d'un curseur de visée selon la revendication 9, comprenant en outre une étape consistant à :

- déplacer le curseur de visée sur l'écran dans la même direction que celle du déplacement de l'élément de commande de direction par rapport à la zone morte dynamique décalée, lorsque des données de position correspondant à la position détectée sont transmises.

**11.** Procédé de contrôle d'un curseur de visée selon l'une des revendications précédentes, comprenant en outre une étape consistant à :

- lisser la position détectée par rapport à un historique des positions précédentes, lors d'un déplacement depuis une position située dans la zone morte dynamique décalée vers une position située au dehors afin de gommer un saut de position lié à la sortie de la zone morte dynamique décalée.

**12.** Procédé de contrôle d'un curseur de visée selon l'une des revendications précédentes, dans lequel le dispositif d'actionnement de jeu est équipé en d'outre une pluralité d'organes de commande, le procédé comprenant en outre une étape consistant à :

- attribuer à ladite pluralité d'organes de commande des fonctionnalités ordinairement attribuées à des touches d'un clavier.

**13.** Dispositif d'actionnement de jeu (10) pour le contrôle d'un curseur de visée sur un écran, le dispositif comprenant :

- au moins un élément de commande de direction (12) agencé pour occuper une position de repos ($X_0$, $Y_0$) lorsqu'il n'est pas actionné et se déplacer au moins selon un axe (X, Y) ;
- un capteur de position (14) agencé pour détecter une position ($X_J$, $Y_J$) de l'élément de commande de direction le long dudit au moins un axe ; et
- des moyens de traitement (16) et des moyens de communication (18) agencés pour la mise en oeuvre du procédé de contrôle d'un curseur de visée selon l'une quelconque des revendications précédentes.

**Patentansprüche**

**1.** Verfahren zur Steuerung eines Zielcursors auf einem Bildschirm mit Hilfe einer Spielbetätigungsvorrichtung (10), ausgestattet mit mindestens einem Element zur Richtungssteuerung (12), das eingerichtet ist, um eine Ruheposition ($X_0$, $Y_0$) einzunehmen, wenn es nicht betätigt wird, und sich mindestens gemäß einer Achse (X, Y) zu verlagern, und eine statische Totzone (ZMS) aufweist, in welcher die Verlagerungen des Elements zur Richtungssteuerung nicht berücksichtigt werden, die durch eine vorher festgelegte Verlagerung des Elements zur Richtungssteuerung entlang mindestens einer Achse beiderseits der Ruheposition definiert ist, wobei das Verfahren den Schritt umfasst des:

- Ermittelns einer Position ($X_J$, $Y_J$) des Elements zur Richtungssteuerung entlang der mindestens einen Achse;

und ferner die folgenden Schritte umfasst:

- Berechnen mindestens einer Ableitung ($V_J$) der Ordnung von mindestens eins in Bezug auf die Zeit der Position des Elements zur Richtungssteuerung in Abhängigkeit von einem Verlauf der ermittelten Positionen;
- wenn sich die ermittelte Position außerhalb der statische Totzone befindet, Definieren einer versetzten dynamischen Totzone (ZMDD) beiderseits der ermittelten Position, bezeichnet als Halteposition;
- Aktivieren der versetzten dynamischen Totzone in Abhängigkeit von der mindestens einen berechneten Ableitung.

**2.** Steuerungsverfahren eines Zielcursors nach Anspruch 1, wobei das mindestens eine Element zur Richtungssteuerung eingerichtet ist, um sich gemäß von mindestens zwei Achsen zu verlagern, die eine Ebene bilden, wobei die versetzte dynamische Totzone durch eine vorher festgelegte Verlagerung in der Ebene um die Halteposition herum definiert ist.

**3.** Steuerungsverfahren eines Zielcursors nach Anspruch 1 oder 2, wobei die mindestens eine berechnete Ableitung die Verlagerungsgeschwindigkeit ($V_J$) des Elements zur Richtungssteuerung ist, basierend auf einem Verlauf der ermittelten Positionen.

**4.** Steuerungsverfahren eines Zielcursors nach Anspruch 3, wobei der Aktivierungsschritt der versetzten dynamischen Totzone die Unterschritte umfasst, die bestehen im:

- Vergleichen der Verlagerungsgeschwindigkeit des Elements zur Richtungssteuerung mit einem vorher festgelegten Geschwindigkeitsgrenzwert ($V_{REF}$),
- wenn die Verlagerungsgeschwindigkeit des Steuerelements unter dem vorher festgelegten Geschwindigkeitsgrenzwert liegt, Aktivieren der versetzten dynamischen Totzone nach Ablauf einer vorher festgelegten Latenzzeit.

**5.** Steuerungsverfahren eines Zielcursors nach Anspruch 3, wobei der Aktivierungsschritt der versetzten dynamischen Totzone die Unterschritte umfasst, die bestehen im:

- Vergleichen der Verlagerungsgeschwindigkeit des Elements zur Richtungssteuerung mit einem vorher festgelegten Geschwindigkeitsgrenzwert ($V_{REF}$),
- wenn die Verlagerungsgeschwindigkeit des Steuerelements unter dem vorher festgelegten Geschwindigkeitsgrenzwert liegt, schrittweises Aktivieren der versetzten dynamischen Totzone während einer vorher festgelegten Latenzzeit, von der mindestens während eines Teils eine vorher festgelegte Amortisierungsfunktion des Zielcursors aktiviert ist.

6.  Steuerungsverfahren eines Zielcursors nach Anspruch 5, wobei die Amortisierungsfunktion eine in Abhängigkeit von der Zeit fallende Funktion ist, wobei das Verfahren einen Schritt umfasst, der besteht im:

    - Übertragen der Positionsdaten, welche der ermittelten, von der Amortisierungsfunktion gewichteten Position entsprechen, wenn diese aktiviert ist, so dass der Zielcursors nach Ablauf der Latenzzeit stoppt.

7.  Steuerungsverfahren eines Zielcursors nach Anspruch 5 oder 6, wobei die Latenzzeit folgendermaßen unterteilt ist:

    - in einen ersten Teil der Latenzzeit, in dem die Amortisierungsfunktion nicht aktiviert ist; und
    - in einen zweiten Teil der Latenzzeit, in dem die Amortisierungsfunktion aktiviert ist.

8.  Steuerungsverfahren eines Zielcursors nach einem der Ansprüche 4 bis 7, umfassend ferner einen Schritt, der besteht im:

    - Übertragen der Positionsdaten, die einem vorher festgelegten Wert ($X_{J0}$, $Y_{J0}$) entsprechen, wenn nach Ablauf der Latenzzeit die Verlagerungsgeschwindigkeit des Steuerelements unter dem vorher festgelegten Geschwindigkeitsgrenzwert liegt und sich die ermittelte Position in der versetzten dynamischen Totzone befindet.

9.  Steuerungsverfahren eines Zielcursors nach Anspruch 8, wobei der Datenübertragungsschritt ferner besteht im:

    - Übertragen der Positionsdaten, die der ermittelten Position entsprechen, wenn alternativ die Verlagerungsgeschwindigkeit des Steuerelements über dem vorher festgelegten Geschwindigkeitsgrenzwert liegt oder wenn die Verlagerungsgeschwindigkeit des Steuerelements unter dem vorher festgelegten Geschwindigkeitsgrenzwert liegt und sich die ermittelte Position außerhalb der versetzten dynamischen Totzone befindet.

10. Steuerungsverfahren eines Zielcursors nach Anspruch 9, umfassend ferner einen Schritt, der besteht im:

    - Verlagern des Zielcursors auf dem Bildschirm in derselben Richtung wie die der Verlagerung des Elements zur Richtungssteuerung in Bezug auf die versetzte dynamische Totzone, wenn Positionsdaten, die der ermittelten Position entsprechen, übertragen werden.

11. Steuerungsverfahren eines Zielcursors nach einem der vorangehenden Ansprüche, umfassend ferner einen Schritt, der besteht im:

    - Glätten der in Bezug auf einen Verlauf der vorangehenden Positionen ermittelten Position bei einer Verlagerung von einer Position, die sich in der versetzten dynamischen Totzone befindet, zu einer Position, die sich außerhalb befindet, um einen Positionssprung zu radieren, der mit dem Ausgang aus der versetzten dynamischen Totzone verbunden ist.

12. Steuerungsverfahren eines Zielcursors nach einem der vorangehenden Ansprüche, wobei die Spielbetätigungsvorrichtung ferner mit einer Vielzahl von Steuerorganen ausgestattet ist, wobei das Verfahren ferner einen Schritt umfasst, der besteht im:

    - Zuweisen, der Vielzahl von Steuerorganen, von Funktionen, die üblicherweise Tasten einer Tastatur zugewiesen sind.

13. Spielbetätigungsvorrichtung (10) für die Steuerung eines Zielcursors auf einem Bildschirm, wobei die Vorrichtung umfasst:

    - mindestens ein Element zur Richtungssteuerung (12), das eingerichtet ist, um eine Ruheposition ($X_0$, $Y_0$) einzunehmen, wenn es nicht betätigt wird, und sich mindestens gemäß einer Achse (X, Y) zu verlagern;
    - einen Positionssensor (14), der eingerichtet ist, um eine Position ($X_J$, $Y_J$) des Elements zur Richtungssteuerung entlang der mindestens einen Achse zu ermitteln; und
    - Verarbeitungsmittel (16) und Kommunikationsmittel (18), die für die Durchführung des Steuerungsverfahren eines Zielcursors nach einem der vorangehenden Ansprüche eingerichtet sind.

**Claims**

1. A method for controlling an aiming cursor on a screen by means of a game actuating device (10) equipped with at least one steering control element (12) arranged to occupy a rest position $(X_0, Y_0)$ when it is not actuated and move at least along an axis (X, Y), and having a static dead zone (ZMS), in which the displacements of the steering control element are not taken into consideration, defined by a predetermined displacement of the steering control element along said at least one axis on either side of the rest position, the method comprising the step of:

   - detecting a position $(X_J, Y_J)$ of the steering control element along said at least one axis;

   and further comprising the following steps:

   - calculating at least one derivative $(V_J)$ of order of at least one with respect to time of the position of the steering control element according to a history of the detected positions;
   - when the detected position is located outside the static dead zone, defining an offset dynamic dead zone (ZMDD) on either side of the detected position called holding position;
   - activating the offset dynamic dead zone according to said at least one calculated derivative.

2. The method for controlling an aiming cursor according to claim 1, wherein said at least one steering control element is arranged to move along at least two axes forming a plane, the offset dynamic dead zone being defined by a predetermined displacement in the plane around the holding position.

3. The method for controlling an aiming cursor according to claim 1 or 2, wherein said at least one calculated derivative is the speed of displacement $(V_J)$ of the steering control element based on a history of the detected positions.

4. The method for controlling an aiming cursor according to claim 3, wherein the step of activating the offset dynamic dead zone comprises the sub-steps consisting of:

   - comparing the speed of displacement of the steering control element with a predetermined speed threshold $(V_{REF})$,
   - when the speed of displacement of the control element is below the predetermined speed threshold, activating the offset dynamic dead zone after a predetermined latency time has elapsed.

5. The method for controlling an aiming cursor according to claim 3, wherein the step of activating the offset dynamic dead zone comprises the sub-steps consisting of:

   - comparing the speed of displacement of the steering control element with a predetermined speed threshold $(V_{REF})$,
   - when the speed of displacement of the control element is below the predetermined speed threshold, gradually activating the offset dynamic dead zone during a predetermined latency time during at least part of which a predetermined damping function of the aiming cursor is activated.

6. The method for controlling an aiming cursor according to claim 5, wherein the damping function is a decreasing function as a function of time, the method comprising a step consisting of:

   - transmitting position data corresponding to the detected position weighted by the damping function when it is activated, so that the aiming cursor is stopped after the latency time has elapsed.

7. The method for controlling an aiming cursor according to claim 5 or 6, wherein the latency time is decomposed as follows:

   - a first part of the latency time during which the damping function is not activated; and
   - a second part of the latency time during which the damping function is activated.

8. The method for controlling an aiming cursor according to any of claims 4 to 7, further comprising a step consisting of:

- transmitting position data corresponding to a predefined value $(X_{J0}, Y_{J0})$ when, after the latency time has elapsed, the speed of displacement of the control element is below the predetermined speed threshold and the detected position is located in the offset dynamic dead zone.

9. The method for controlling an aiming cursor according to claim 8, wherein the step of transmitting the data further consists of:

- transmitting position data corresponding to the detected position, when alternatively, the speed of displacement of the control element is above the predetermined speed threshold or when the speed of displacement of the control element is below the predetermined speed threshold and the detected position is located outside the offset dynamic dead zone.

10. The method for controlling an aiming cursor according to claim 9, further comprising a step consisting of:

- displacing the aiming cursor on the screen in the same direction as that of the displacement of the steering control element relative to the offset dynamic dead zone, when position data corresponding to the detected position are transmitted.

11. The method for controlling an aiming cursor according to any of the preceding claims, further comprising a step consisting of:

- smoothing the detected position relative to a history of the preceding positions, during a displacement from a position located in the offset dynamic dead zone to a position located outside in order to erase a position jump linked to the exit from the offset dynamic dead zone.

12. The method for controlling an aiming cursor according to any of preceding claims, wherein the game actuating device is further equipped with a plurality of control members, the method further comprising a step consisting of:

- assigning to said plurality of control members functionalities ordinarily assigned to keys of a keyboard.

13. A game actuating device (10) for controlling an aiming cursor on a screen, the device comprising:

- at least one steering control element (12) arranged to occupy a rest position $(X_0, Y_0)$ when it is not actuated and move at least along one axis (X, Y);
- a position sensor (14) arranged to detect a position $(X_J, Y_J)$ of the steering control element along said at least one axis; and
- processing means (16) and communication means (18) arranged for the implementation of the method for controlling an aiming cursor according to any one of the preceding claims.

Fig. 1

Initialisation   S1

S11   Déclaration des variables

Chargement paramètres profil   S12

Configuration ZMS

S13

Calcul paramètres d'entrée

S14

Calibration joystick

S15

**Fig. 2**

Acquisition données   S2

S21   Détection position joystick $(X_J, Y_J)$

S22   Transformation position joystick

S23   Déterminer vitesse joystick $(V_J)$

**Fig. 3**

Gestion ZMS — S3

S31

(X$_J$, Y$_J$) ∈ ZMS ?

NON

Acquisition de données

S2

OUI

S32

V$_J$>V$_{REF}$ ?

NON

OUI

Transmettre valeur prédéfinie (X$_0$, Y$_0$)

S34

Transmettre position joystick (X$_{.I}$, Y$_{.I}$)

S33

Gestion ZMDD

S4

**Fig. 4**

Gestion ZMDD — S4

S41

Normalisation
vecteur position

S40

$(X_J, Y_J) \in$ ZMDD? — NON

OUI

S42

$V_J > V_{REF}$ ?

NON

OUI

Fonction
amortissement

S44

Courbe réponse
joystick

S43

**Fig. 5**

S440

Régler temps de
latence $(t_1, t_2)$

Fonction
amortissement

S44

S441

$t < t_1$ ?

OUI

NON

S442

Transmettre
position pondérée
(coefficient K)

S443

$t < t_2$ ?

OUI

NON

S444

Transmettre
Position pondérée
$k(t_1) = ((X(t_1), Y(t_1)).K)$
$k(t_2) = 0$

Activation
ZMDD

S445

**Fig. 6**

Configuration ZMS — S13

S131 — Mesurer inclinaison maximale ($I_{MAX}$)

S132 — Régler ZMS ($\%I_{MAX}$)

S133 — Détecter position repos ($X_0$, $Y_0$)

S134 — Centrer ZMS

S135 — Mettre à l'échelle $V_{MAX}(X, Y)$

S136 — $(X_J, Y_J) \in$ ZMS ?

NON

OUI

S137 — Lisser position joystick

**Fig. 7**

**Fig. 8**

**RÉFÉRENCES CITÉES DANS LA DESCRIPTION**

**Documents brevets cités dans la description**

- JP 2010137079 A
- JP H08281584 B
- US 2013100021 A
- US 2005190150 A
- WO 2014106594 A